# EUROPEAN PATENT SPECIFICATION

(11) **EP 1 688 324 B1**
(45) Date of publication and mention of the grant of the patent: **20.08.2008**
(21) Application number: 06002302.5
(22) Date of filing: 03.02.2006
(51) Int. Cl.: B60R 22/18, B60R 22/20, B60R 22/22, B60R 22/26

(54) **Buckle device**
Schnallenvorrichtung
Boucle de ceinture

(30) Priority: 04.02.2005 JP 2005028561
(43) Date of publication of application: 09.08.2006
(73) Proprietor: KABUSHIKI KAISHA TOKAI RIKA DENKI SEISAKUSHO, Niwa-gun, Aichi-ken 480-0195 (JP); Toyota Jidosha Kabushiki Kaisha, Toyota-shi, Aichi-ken, 471-8571 (JP)
(72) Inventor: Wataru, Yanagawa c/o K.K. Tokai-Rika-Denki-Seisakusho, Niwa-gun, Aichi-ken, (JP); Shigekazu, Imanaka c/o Toyota Jidosha K.K., Toyota-shi, Aichi-ken, 471-8571 (JP); Mototsugu, Hara c/o Toyota Jidosha K.K., Toyota-shi, Aichi-ken, 471-8571 (JP)
(74) Representative: Goddar, Heinz J.

(56) References cited:
- EP-A- 1 498 323
- DE-U1- 20 200 271
- US-B1- 6 328 386
- PATENT ABSTRACTS OF JAPAN vol. 017, no. 130 (M-1382), 18 March 1993 (1993-03-18) -& JP 04 310452 A (TOYOTA AUTOM LOOM WORKS LTD), 2 November 1992 (1992-11-02)

## Description

### BACKGROUND OF THE INVENTION

### Field of the Invention

The present invention relates to a buckle device which is equipped with a buckle at which a tongue plate is inserted, which tongue plate is attached to a webbing for restraint of a vehicle occupant.

### Description of the Related Art

As a buckle device for a rear seat of a vehicle, a buckle device which is structured such that a buckle is supported in a free-standing state at the rear seat, in order to facilitate insertion of a tongue plate into the buckle and improve usability, has been proposed heretofore (see, for example, DE 202 00 271 U1, US-B1-6 328 386, which discloses a buckle device according to the preamble of claim 1, and JP-A-2002-137714).

In a buckle device illustrated in JP-A-2002-137714, the buckle is coupled to a bracket, which is fixed to a floor surface of the vehicle, via an inner plate anchor formed of a steel plate. The inner plate anchor is supported at the bracket to be capable of turning in a predetermined range in a front-rear direction of the vehicle, and can respond to seat arrangements of the rear seat(s). In addition, the inner plate anchor is supported at the bracket to be slideable in a predetermined range in a vertical direction of the vehicle. Usually, the buckle and the inner plate anchor are disposed at an uppermost position of this sliding range due to urging force of a spring. Then, when an occupant is seated at the rear seat, the buckle is pushed downward against this urging force together with the inner plate anchor. Thus, a deterioration in seating comfort of the occupant due to a posterior portion of the occupant abutting against the buckle can be prevented.

However, with a buckle device of the structure described above, rivets, washers, springs and the like are provided at a region of coupling between the inner plate anchor and the bracket, structure is complex, and there are problems in that a number of components is large and costs are raised.

### SUMMARY OF THE INVENTION

In consideration of the circumstances described above, the present invention will provide a buckle device, with a simple structure, which is capable of assuring usability and excellent seating comfort for a vehicle occupant, and which is capable of responding to seat arrangements.

In order to address the issues described above, a buckle device of a first aspect of the present invention includes: an anchor member which is fixed to at least one of a floor surface of a vehicle and a structural member of a seat of the vehicle, the anchor member including a coupling portion, of which an outer periphery of a distal end portion is formed in an arc form; a buckle main body at which a tongue plate is inserted, the tongue plate being attached to a webbing for restraint of a vehicle occupant; a coupling member which is flexible, which couples the buckle main body with the coupling portion of the anchor member; and a support member formed in a tubular form, the support member accommodating the coupling member thereinside, the support member spanning between the buckle main body and the coupling portion of the anchor member, in a state in which the coupling portion of the anchor member is engaged, from the distal end portion thereof, at an inner periphery of a lower end portion of the support member, for supporting the buckle main body in a free-standing state, and the lower end portion inner periphery of the support member being guided at the arc-form outer periphery of the coupling portion of the anchor member such that the support member is capable of turning concentrically with the arc-form outer periphery.

In the buckle device of the present aspect, the tubular support member spans between the coupling portion of the anchor member and the buckle main body. The coupling member which couples the coupling portion of the anchor member with the buckle main body is accommodated inside the support member. The coupling portion of the anchor member is fitted in, from the distal end portion thereof, at the inner periphery of the lower end portion of the support member. Hence, the support member is supported in a free-standing state, and the buckle main body is supported in a free-standing state by the support member. Therefore, when the tongue plate attached to the webbing for occupant restraint is being inserted at the buckle main body, there is no need to hold the buckle with a hand, and excellent usability for the occupant can be assured.

Moreover, the outer periphery of the distal end portion of the coupling portion of the anchor member is formed in an arc shape. The lower end portion inner periphery of the support member is guided by this arc-form outer periphery. Thus, the support member can be turned concentrically with the arc-form outer periphery. Therefore, when a posterior portion of an occupant abuts against the buckle main body, the buckle main body turns, together with the support member, and interference between the buckle main body and the posterior portion of the occupant can be avoided. Thus, excellent seating comfort for the occupant can be assured. Further, it is possible to respond to seating arrangements by turning the support member.

Furthermore, because this is a structure in which the support member which supports the buckle main body in the free-standing state is directly guided for turning by the coupling portion of the anchor member, the structure is simple.

At the buckle device of the present invention, the support member may be formed with a member which is flexible.

In the buckle device with such a structure, the support member which supports the buckle main body features flexibility. Therefore, as well as the support member and the buckle main body being capable of turning in the direction of guidance by the coupling portion of the anchor member, it is possible for the support member to move in a direction different from this guidance direction (the direction of turning), by flexing. Thus, interference between the buckle main body and the posterior portion of the occupant is more excellently avoided, and seating comfort of the occupant is further improved.

At the buckle device of the present invention, a pair of abutting portions may be formed at the lower end portion inner periphery of the support member, the abutting portions abutting against the arc-form outer periphery of the coupling portion of the anchor member, and a distance dimension of a facing separation of the pair of abutting portions may be formed to be smaller than a maximum width dimension of the coupling portion.

In the buckle device with such a structure, the pair of abutting portions formed at the lower end portion inner periphery of the support member abut against the arc-form outer periphery of the anchor member coupling portion. This pair of abutting portions slides against the arc-form outer periphery of the coupling portion, thus guiding the support member in the turning direction. Furthermore, the distance dimension of the facing separation between the two abutting portions is formed to be smaller than the maximum width dimension of the coupling portion of the anchor member. Consequently, the support member can be prevented from moving toward a base end side of the coupling portion (i.e., falling down).

The buckle device of the present invention may be structured such that a protrusion portion is formed at one of the coupling portion of the anchor member and the lower end portion inner periphery of the support member, a recess portion is formed at the other thereof, the protrusion portion fitting into the recess portion when the support member turns to a predetermined position relative to the anchor member, and, in the state in which the protrusion portion is fitted into the recess portion, the support member is provisionally retained at the predetermined position.

In the buckle device with such a structure, when the support member supporting the buckle main body has turned to the predetermined position relative to the anchor member, the protrusion portion formed at the one of the anchor member coupling portion and the support member lower end portion inner periphery fits into the recess portion formed at the other thereof. In this state, the support member, together with the buckle main body, is temporarily retained at the predetermined position. Hence, at, for example, a time of an operation of assembly of a seat to the vehicle, it is possible to temporarily retain the support member and the buckle main body at the specified predetermined position (which is a position which will not impede the operation of assembly of the seat), and the operation of assembly of the seat is made easier.

At the buckle device of the present invention, the coupling member may include a belt formed in a long-belt shape. Further, a winding hole may be formed in the coupling portion of the anchor member, the belt being wound through the winding hole, and an inner periphery of the winding hole may be formed in an arc form which is concentric with the arc form outer periphery of the coupling portion.

In the buckle device with such a structure, the long belt, which couples the buckle main body with the anchor member coupling portion, is wound through the winding hole formed in the coupling portion. The inner periphery of this winding hole is formed in the arc shape which is concentric with the arc-form outer periphery of the coupling portion. Therefore, when the buckle main body is guided to turn with the support member by the arc-form outer periphery of the coupling portion, the belt is guided by the arc-form inner periphery of the winding hole, and the buckle main body and support member can smoothly turn together.

As described hereabove, with a buckle device relating to the present invention, it is possible to assure usability and excellent seating comfort for a vehicle occupant and it is possible to respond to seat arrangements, with a simple structure.

### BRIEF DESCRIPTION OF THE DRAWINGS

An embodiment of the invention will be described in detail based on the following figures, wherein:
Figure 1 is a perspective view showing overall structure of a buckle device relating to the embodiment of the present invention;
Figure 2 is a rear side view showing overall structure of the buckle device relating to the embodiment of the present invention;
Figure 3 is a front sectional view showing overall structure of the buckle device relating to the embodiment of the present invention;
Figure 4 is a side sectional view showing overall structure of the buckle device relating to the embodiment of the present invention;
Figure 5A is a sectional view showing partial structure of the buckle device relating to the embodiment of the present invention, which shows a state in which a coupling member is turned toward a vehicle rearward side relative to an anchor member;
Figure 5B is a sectional view showing the partial structure of the buckle device relating to the embodiment of the present invention, which shows a state in which the coupling member is supported perpendicularly relative to the anchor member;
Figure 5C is a sectional view showing the partial structure of the buckle device relating to the embodiment of the present invention, which shows a state in which the coupling member is turned toward a vehicle forward side; and
Figure 6 is a perspective view showing a state in which the buckle device relating to the embodiment of the present invention is provided in a vehicle.

### DETAILED DESCRIPTION OF THE INVENTION

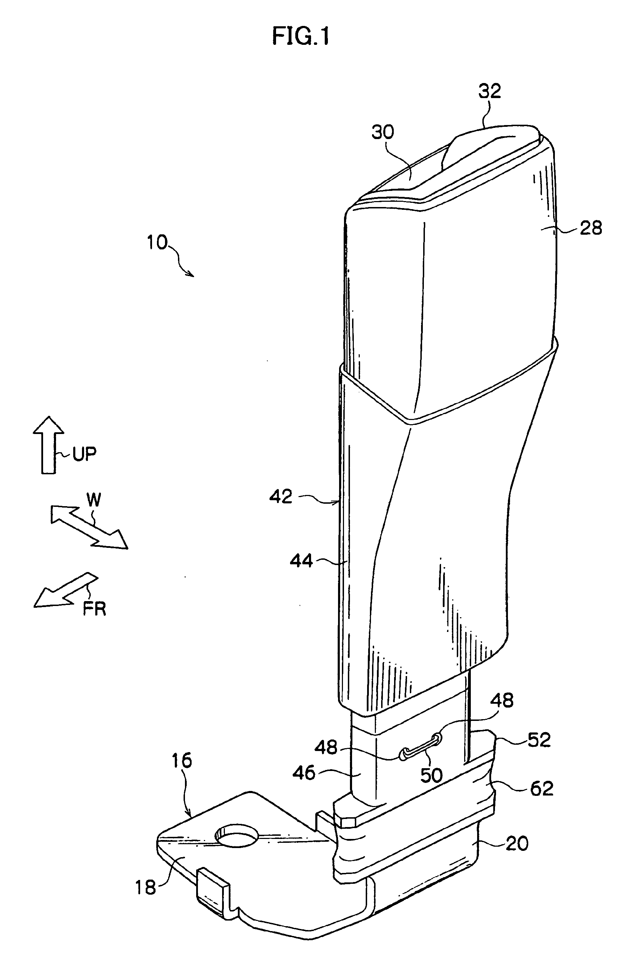

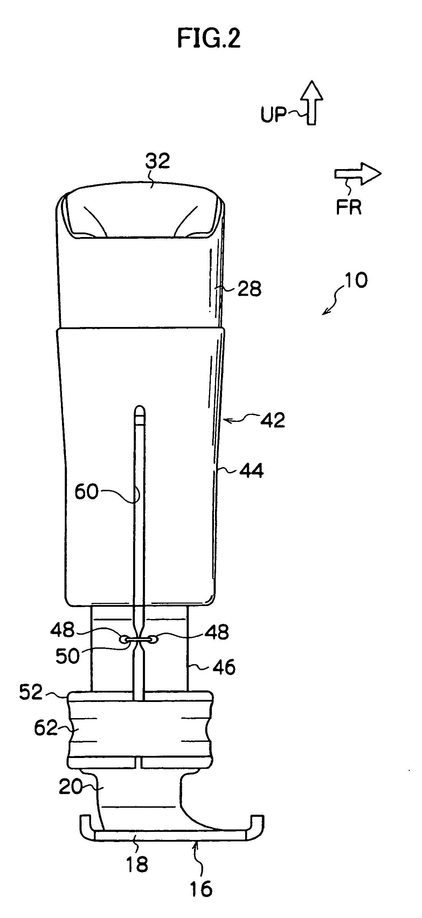

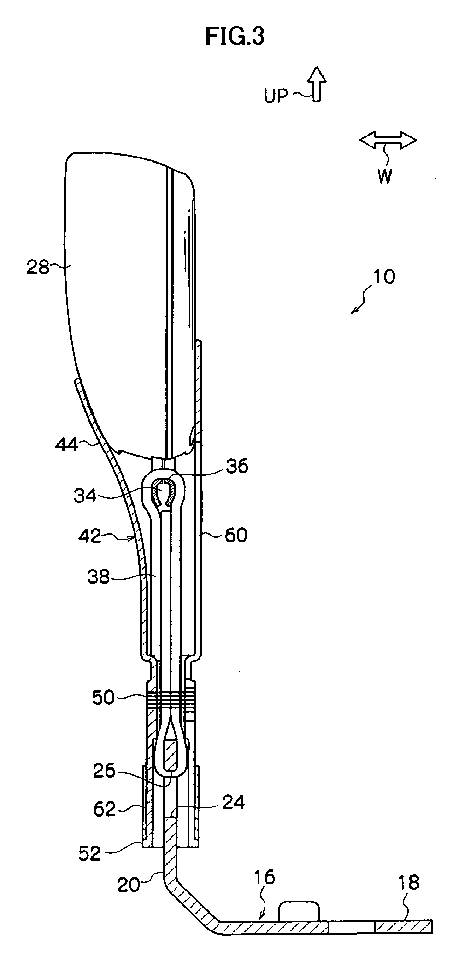

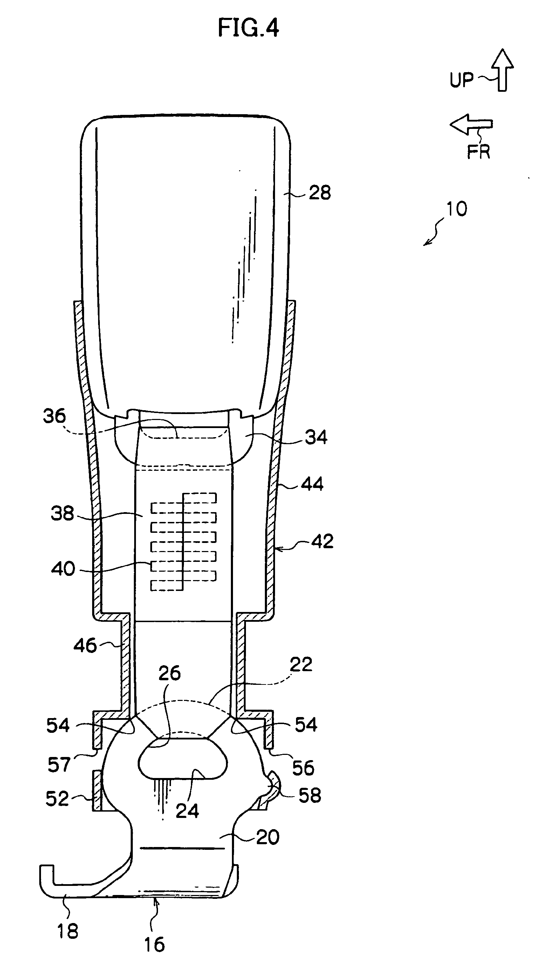

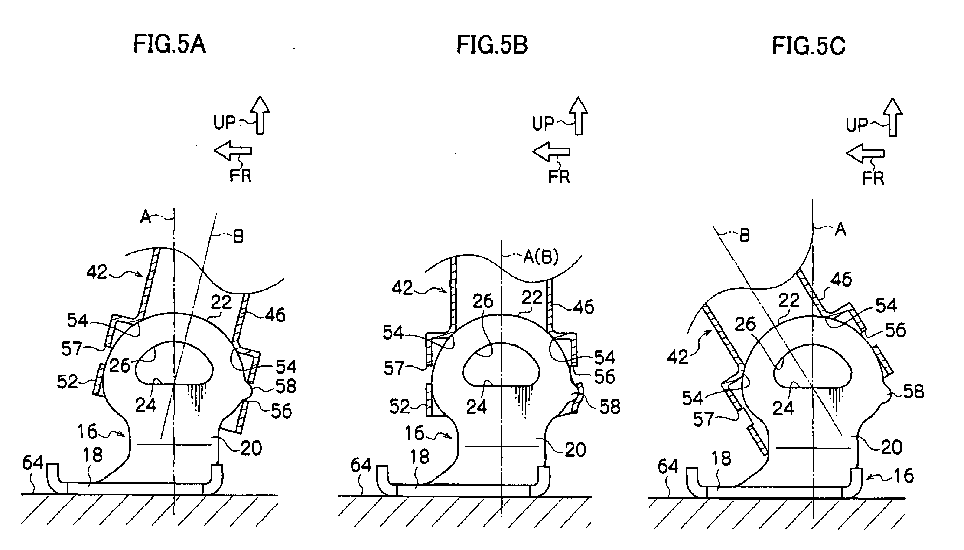

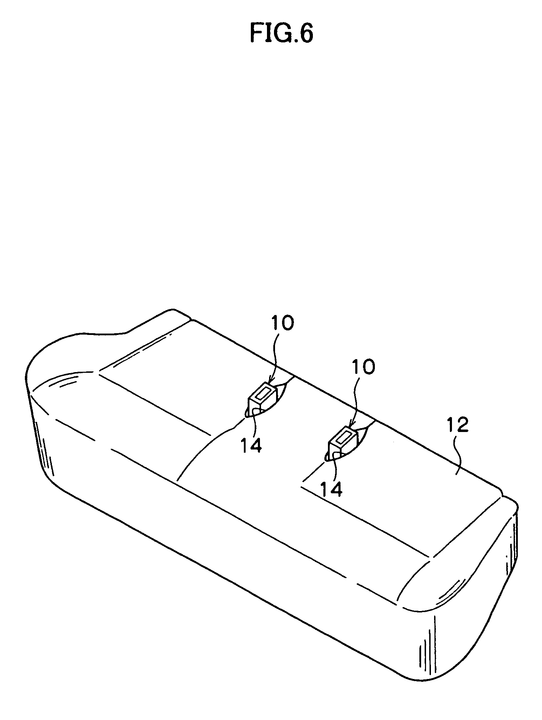

Figure 1 shows overall structure of a buckle device 10 relating to an embodiment of the present invention in a perspective view. Figure 2 shows the overall structure of the buckle device 10 in a rear side view. Figures 3 and 4 show the overall structure of the buckle device 10 in sectional views, and Figures 5A to 5C show partial structure of the buckle device 10 in sectional views. Furthermore, Figure 6 shows a state in which the buckle device 10 is provided in a vehicle in a perspective view.

Herein, the arrow FR in the drawings represents a vehicle forward direction, the arrow W represents a vehicle width direction and the arrow UP represents a vehicle upward direction.

Referring to Figure 6, the buckle devices 10 relating to the present embodiment are disposed one at each of a pair of openings 14 which are formed in a rear seat 12 of the vehicle. At the rear seat 12, a pair of (unillustrated) webbings for restraint of vehicle occupants are provided, and tongue plates (also not shown) are attached to the webbings.

The buckle device 10 is provided with a plate anchor 16 (see Figure 1), which serves as an anchor member. The plate anchor 16 is formed of a steel plate or the like which is inflected in a substantial 'L' shape, and is provided with a base portion 18, which is fixed to a floor surface 64 of the vehicle (see Figures 5A to 5C). A plate-form coupling portion 20 is formed to integrally protrude toward the vehicle upward side from one width direction end of the base portion 18. The coupling portion 20 is formed such that a width dimension of a distal end portion (vehicle upward side) thereof is larger than a width dimension of a base end portion thereof (i.e., the base portion 18 side, which is the vehicle downward side, thereof). An outer periphery of the distal end portion of the coupling portion 20 is formed in an arc shape, to serve as a boot-sliding face 22 (see Figure 4).

A winding hole 24 is formed in the distal end portion of the coupling portion 20, passing through the coupling portion 20 in a plate thickness direction. A portion of an inner periphery of the winding hole 24, which portion corresponds to the distal end portion of the coupling portion 20, (i.e., a distal end side of the winding hole 24) is formed in an arc shape which is concentric with the boot-sliding face 22, and serves as a belt-sliding face 26.

The buckle device 10 is also provided with a buckle main body 28 (see Figure 1). An insertion hole 30 is formed in an upper end portion of the buckle main body 28. A tongue plate is inserted and retained at the insertion hole 30. A release button 32 is also provided at the upper end portion of the buckle main body 28. When the release button 32 is operated by pressing, the retention of the tongue plate is released. A plate-form coupling plate 34 is fixed to a lower end portion of the buckle main body 28 (see Figure 4). A rectangular coupling hole 36 is formed in the coupling plate 34. A belt 38, which serves as a coupling member, is wound through this coupling hole 36.

The belt 38 is formed in a long-belt shape featuring flexibility, of a material such as artificial fiber or the like. The belt 38 is also wound through the aforementioned winding hole 24 in the coupling portion 20 of the plate anchor 16. Then, one length direction end portion and the other length direction end portion of this belt 38 (i.e., regions thereof which have been wound through the coupling hole 36 and the winding hole 24) are superposed with one another to form a three-layer structure overall (see Figure 3), and the triply superposed portions are securely stitched together with stitching thread 40 (see Figure 4). Thus, the buckle main body 28 and the plate anchor 16 are coupled by the belt 38.

The present buckle device 10 is also equipped with a boot 42, which serves as a support member. The boot 42 is formed overall in a tubular form with a rectangular cross-section, of a material such as synthetic resin or the like, and features flexibility. In a state in which the belt 38 is accommodated inside the boot 42, the boot 42 spans between the buckle main body 28 and the coupling portion 20 of the plate anchor 16. The boot 42 is equipped with a main body portion 44 at an upper end side thereof. The main body portion 44 is formed in a hollow tubular form with a wedge shape (i.e., hollow wedge shape) in side view, of which both upper and lower ends are open. A lower end portion of the buckle main body 28 is fitted in at an upper end opening portion of the main body portion 44. Thus, the main body portion 44 (i.e., the boot 42) is coupled with the buckle main body 28.

A deformation portion 46, which is formed in a hollow tubular shape with a rectangular cross-section, is integrally provided at the lower end of the main body portion 44. The deformation portion 46 is formed to be smaller than a lower end portion of the main body portion 44 in both a width dimension along the vehicle front-rear direction and a thickness dimension along the vehicle width direction. Two through-holes 48 are formed in each of side wall portions of the deformation portion 46, at two sides in the vehicle width direction. The deformation portion 46 is stitched together with the belt 38 by stitching thread 50, which is passed through these four through-holes 48. Thus, mispositioning of the belt 38 relative to the boot 42 is prevented.

An anchor-embracing portion 52, which is formed in a tubular form with a rectangular cross-section, is integrally provided at a lower end of the deformation portion 46. The anchor-embracing portion 52 is formed with a longer width dimension along the vehicle front―rear direction than the deformation portion 46. Consequently, as is shown in Figure 4, vehicle front and rear direction portions of a region of connection between the anchor-embracing portion 52 and the deformation portion 46 are formed with stepped shapes, and inner peripheral sides of the anchor-embracing portion 52 at the stepped portions are formed as a pair of abutting portions 54.

The aforementioned distal end portion of the coupling portion 20 of the plate anchor 16 is accommodated at the inner peripheral side of the anchor-embracing portion 52. Each of two width direction end portions of the distal end portion of the coupling portion 20 (i.e., of the boot-sliding face 22) engage at inner peripheral faces of the two width direction sides of the anchor-embracing portion 52. Consequently, the boot 42 is supported in a free-standing (upright) state relative to the plate anchor 16, and the buckle main body 28 and the belt 38 are supported in a free-standing state by the boot 42.

The boot-sliding face 22 of the coupling portion 20 also abuts against the pair of abutting portions 54 formed at the region of connection of the anchor-embracing portion 52 with the deformation portion 46. Hence, when a load acts on the boot 42 in the vehicle front-rear direction, the inner periphery of two width direction sides of the anchor-embracing portion 52 and the pair of abutting portions 54 are guided by the boot-sliding face 22 of the coupling portion 20, such that the boot 42 turns concentrically with the boot-sliding face 22 (in other words, the anchor-embracing portion 52 of the boot 42 is rotatably coupled with the coupling portion 20 of the plate anchor 16).

A distance dimension of a facing separation between the pair of abutting portions 54 (a distance of separation thereof along the vehicle front―rear direction in Figure 4) is formed to be smaller than a maximum width dimension of the coupling portion 20 (a length dimension thereof along the vehicle front-rear direction in Figure 4). Thus, movement(i.e., falling down) of the boot 42 toward a base end side (the base portion 18 side) of the coupling portion 20 is blocked by the pair of abutting portions 54 abutting against the boot-sliding face 22.

Further, a pair of turning-stop holes 56 and 57 are formed as recess portions in the two width direction end portions of the anchor-embracing portion 52 of the main body portion 44. At one width direction end side (in the present embodiment, the vehicle rearward side) of the coupling portion 20 of the plate anchor 16, a turning-stop protrusion 58 is formed as a protrusion portion which is capable of fitting in at the turning-stop hole 56. As shown in Figure 5A, when the boot 42 is turned to a predetermined position relative to the plate anchor 16, the turning-stop protrusion 58 fits in at the turning-stop hole 56. Moreover, the structure is such that, in this state, the boot 42 is provisionally retained at the position shown in Figure 5A. In Figures 5A to 5C, for convenience of description, the belt 38 is omitted from the drawings.

The plate anchor 16 that is disposed at the right side of the vehicle and a plate anchor that is disposed at the left side of the vehicle are formed with left-right symmetry. In Figures 1 to 5C, the buckle device 10 which is illustrated is structured to utilize the plate anchor 16 disposed at the right side of the vehicle. When the buckle device 10 is to be structured to utilize the plate anchor disposed at the left side of the vehicle, the turning-stop hole 57 of the boot 42 is formed to correspond with the turning-stop protrusion 58. Of the present buckle device 10, components apart from the plate anchor 16 are structured to be employable at both the left and right sides of the vehicle.

As is shown in Figure 2, an incision 60 is formed in a rear side face of the boot 42 from an upper end side of the main body portion 44 to the lower end of the anchor-embracing portion 52. Accordingly, with this buckle device 10, at a time of assembly of the device, the boot 42 can be assembled after the buckle main body 28 and the plate anchor 16 have been coupled by the belt 38. Further, tape 62 is wound round at an outer peripheral portion of the anchor-embracing portion 52. Thus, the incision 60 can be prevented from opening up after the buckle device 10 has been completed as a product.

Next, operations of the present embodiment will be described.

At the buckle device 10 with the structure described above, the anchor-embracing portion 52 is formed at the lower end side of the boot 42 which spans between the coupling portion 20 of the plate anchor 16 and the buckle main body 28. The coupling portion 20 of the plate anchor 16 is fitted in, from the distal end portion thereof, at the inner periphery of the anchor-embracing portion 52. Hence, the boot 42 is supported in a free-standing state, and the buckle main body 28 and belt 38 are supported in the free-standing state by the boot 42. Therefore, when the tongue plate attached to the webbing for occupant restraint is to be inserted into the buckle main body 28, there is no need to hold the buckle with a hand. Thus, excellent usability for occupants can be assured.

Further, the outer periphery of the distal end portion of the coupling portion 20 of the plate anchor 16 is formed in the arc shape to serve as the boot-sliding face 22. The inner periphery of the anchor-embracing portion 52 at the two width direction sides and the pair of abutting portions 54 of the anchor-embracing portion 52 are guided by the boot-sliding face 22, and thus the boot 42 is structured to be capable of turning in the vehicle front-rear direction concentrically with the boot-sliding face 22 (see Figures 5A to 5C). Therefore, when a posterior portion of an occupant abuts against the buckle main body 28, the buckle main body 28 turns with the boot 42, and thus interference of the buckle main body 28 with the occupant's posterior portion can be avoided. Thus, excellent seating comfort for occupants can be assured.

Thus, this buckle device 10 is a structure in which the boot 42, which supports the buckle main body 28 in the free-standing state, is directly guided by the coupling portion 20 of the plate anchor 16 (i.e., the boot-sliding face 22) for turning. Consequently, fabrication is simple, and a lowering of costs of the buckle device can be expected.

Moreover, because the boot 42 turns together with the buckle main body 28 in the vehicle front-rear direction as described above, the buckle device 10 can be compatible with, for example, a vehicle featuring a seat arrangement of a type in which the rear seat 12 descends to the vehicle forward side thereof when the rear seat 12 is being tilted down. That is, when the rear seat 12 is tilted down, the boot 42 turns to the position shown in Figure 5C in accordance with the tilting of the rear seat 12 (a position in which an axial line B of the boot 42 is inclined by a predetermined angle to the vehicle forward side relative to an axial line A which is perpendicular to the floor surface 64 of the vehicle). Then, when the rear seat 12 is returned from the tilted-down state to a usual position thereof, the boot 42 turns to the position shown in Figure 5B due to being pushed by the rear seat 12 (a position in which the axial line B of the boot 42 coincides with the axial line A which is perpendicular to the floor surface 64 of the vehicle).

Furthermore, with this buckle device 10, the boot 42 which supports the buckle main body 28 features flexibility. Therefore, the boot 42 and the buckle main body 28, as well as being capable of turning in the direction of guidance by the boot-sliding face 22 of the plate anchor 16 (which is the vehicle front-rear direction in the present embodiment), can flexibly move in directions different from this guidance direction (the vehicle width direction and the like), by the boot 42 flexing. Thus, interference between the buckle main body 28 and a posterior portion of an occupant is more excellently avoided, and seating comfort of occupants is further improved.

Further still, with this buckle device 10, when the boot 42 which supports the buckle main body 28 is turned to the position shown in Figure 5A relative to the plate anchor 16 (a position in which the axial line B of the boot 42 is inclined by a predetermined angle to the vehicle rearward side relative to the axial line A which is perpendicular to the floor surface 64 of the vehicle), the turning-stop protrusion 58 formed at the coupling portion 20 of the plate anchor 16 fits into the turning-stop hole 56 formed in the anchor-embracing portion 52 of the boot 42. In this state, the boot 42, together with the buckle main body 28, is provisionally retained at the position shown in Figure 5A. Thus, with the present buckle device 10, the boot 42 can be provisionally retained at a predetermined position specified by the turning-stop protrusion 58 and the turning-stop hole 56. Therefore, at, for example, a time of assembly of the rear seat 12 to the vehicle, the boot 42 and buckle main body 28 can be temporarily retained at a position which will not impede an operation of assembly of the rear seat 12. Thus, the operation of assembly of the rear seat 12 to the vehicle is made easier, and work efficiency of the assembly operation are improved.

Further yet, in the present buckle device 10, the belt 38 which couples the buckle main body 28 with the coupling portion 20 of the plate anchor 16 is wound through the winding hole 24 formed in the coupling portion 20. The belt-sliding face 26 of the winding hole 24 is formed in an arc form which is concentric with the boot-sliding face 22 of the coupling portion 20. Therefore, when the buckle main body 28 is being guided at the boot-sliding face 22 with the boot 42 and turned, the belt 38 is guided at the belt-sliding face 26, and the buckle main body 28 and boot 42 can together turn smoothly. Thus, with this buckle device 10, smooth turning of the belt 38 can be assured.

Further again, in this buckle device 10, the pair of abutting portions 54 formed at the inner periphery of the anchor-embracing portion 52 of the boot 42 are formed with the distance dimension of the facing separation thereof being smaller than the maximum width dimension of the coupling portion 20. Consequently, the boot 42 can be prevented from moving (falling down) toward the base end side (the base portion 18 side) of the coupling portion 20.

As has been described hereabove, with the buckle device 10 relating to the present embodiment of the invention, it is both possible to assure usability and excellent seating comfort for occupants and possible to respond to seat arrangements, with a simple structure.

The buckle device 10 relating to the embodiment described above has a structure in which the turning-stop protrusion 58 is formed as a protrusion portion at the coupling portion 20 of the plate anchor 16 and the turning-stop holes 56 and 57 are formed as recess portions at the anchor-embracing portion 52 of the boot 42. However, this is not limiting. Structures are also possible in which a protrusion portion is formed at the inner periphery of the anchor-embracing portion 52 of the boot 42, and a recess portion into which the protrusion portion can be fitted is formed at the coupling portion of the plate anchor.

Further, the buckle device 10 relating to the embodiment described above has a structure in which the long belt-form belt 38 is employed as the coupling member. However, this is not limiting. Structures are also possible in which wire or the like is employed as the coupling member.

Further again, the buckle device 10 relating to the embodiment described above is structured to be utilized for the rear seat 12 of a vehicle. However, this is not limiting. Structures are also possible in which the buckle device of the present invention is utilized for a front seat of a vehicle.

Further yet, the buckle device 10 relating to the embodiment described above has a structure in which the plate anchor 16 is fixed to the floor surface 64 of the vehicle. However, this is not limiting. Structures are also possible in which the plate anchor is fixed to a structural member of the rear seat 12 or a front seat.

The features disclosed in the foregoing description, in the claims and/or in the accompanying drawings may, both separately and in any combination thereof, be material for realising the invention in diverse forms thereof.

## Claims

1. A buckle device comprising:
an anchor member (16) which is fixed to at least one of a floor surface (64) of a vehicle and a structural member of a seat of the vehicle, the anchor member (16) including a coupling portion (20), of which an outer periphery of a distal end portion is formed in an arc form;
a buckle main body (28) at which a tongue plate is inserted, the tongue plate being attached to a webbing for restraint of a vehicle occupant;
a coupling member (38) which is flexible, which couples the buckle main body (28) with the coupling portion of the anchor member (16); and
a support member (42) formed in a tubular form,
the support member (42) accommodating the coupling member (38) thereinside,
the support member (42) spanning between the buckle main body (28) and the coupling portion (20) of the anchor member (16),
**characterised in that**
an inner periphery of a lower end portion of the support member (42) engages the coupling portion (20) of the anchor member (16) from the distal end portion thereof for supporting the buckle main body (28) in a free-standing state, and
the lower end portion inner periphery of the support member (42) is guided at the arc-form outer periphery of the coupling portion (20) of the anchor member (16) such that the support member (42) is capable of turning concentrically with the arc-form outer periphery.

2. The buckle device of claim 1, wherein the support member (42) is formed with a flexible member.

3. The buckle device of claim 1, **characterised in that** a pair of abutting portions (54) are formed at the lower end portion inner periphery of the support member (42), the abutting portions (54) abutting against the arc-form outer periphery of the coupling portion (20) of the anchor member (16), and
a distance dimension of a facing separation of the pair of abutting portions (54) is formed to be smaller than a maximum width dimension of the coupling portion (20).

4. The buckle device of claim 1, **characterised in that** a protrusion portion (58) is formed at one of the coupling portion (20) of the anchor member (16) and the lower end portion inner periphery of the support member (42),
a recess portion (56, 57) is formed at the other thereof, the protrusion portion (58) fitting into the recess portion (56, 57) when the support member (42) turns to a predetermined position relative to the anchor member (16), and,
in the state in which the protrusion portion (58) is fitted into the recess portion (56, 57), the support member (42) is provisionally retained at the predetermined position.

5. The buckle device of claim 1, **characterised in that** the coupling member comprises a belt (38) formed in a long-belt shape,
a winding hole (24) is formed in the coupling portion (20) of the anchor member (16), the belt being wound through the winding hole (24), and
an inner periphery of the winding hole (24) is formed in an arc form which is concentric with the arc form outer periphery of the coupling portion (20).

## Patentansprüche

1. Ein Gurtschloss mit:
einem Ankerelement (16), das wenigstens an einer Bodenfläche (64) eines Fahrzeugs und/oder eines strukturellen Elements eines Sitzes des Fahrzeugs befestigt ist, wobei das Ankerelement (16) einen Kupplungsabschnitt (20) aufweist, von dem ein äußerer Umfang eines distalen Endabschnitts bogenförmig ausgebildet ist;
einem Schlosshauptkörper (28), in den eine Zungenplatte eingesetzt ist, die an einem Gurt zum Rückhalten eines Benutzers eines Fahrzeugs angebracht ist;
einem Kupplungselement (38), das flexibel ist und das den Schlosshauptkörper (28) mit dem Kupplungsabschnitt des Ankerelements (16) koppelt; und
einem Stützelement (42), das rohrförmig ausgebildet ist,
wobei das Stützelement (42) in seinem Inneren das Kupplungselement (38) aufnimmt, und
das Stützelement (42) sich zwischen dem Schlosshauptkörper (28) und dem Kupplungsabschnitt (20) des Ankerelements (16) erstreckt,
**dadurch gekennzeichnet, dass**
ein innerer Umfang eines unteren Endabschnitts des Stützelements (42) den Kupplungsabschnitt (20) des Ankerelements (16) von dessen distalen Endabschnitt ergreift zum Stützen des Schlosshauptkörpers (28) in einem frei stehenden Zustand, und
der innere Umfang des unteren Endabschnitts des Stützelements (42) an dem bogenförmigen äußeren Umfang des Kupplungsabschnitts (20) des Ankerelements (16) derart geführt ist, das das Stützelement (42) sich konzentrisch mit dem bogenförmigen äußeren Umfang drehen kann.

2. Das Gurtschloss nach Anspruch 1, wobei das Stützelement (42) mit einem flexiblen Element ausgebildet ist.

3. Das Gurtschloss nach Anspruch 1, **dadurch gekennzeichnet, dass** ein Paar von Anlageabschnitten (54) an dem inneren Umfang des unteren Endabschnitts des Stützelements (42) ausgebildet ist, wobei die Anlageabschnitte (54) gegen den bogenförmigen Umfang des Kupplungsabschnitts (22) des Ankerelements (16) anstoßen, und
der Abstand des zueinander weisenden Teile des Paares von Anlageabschnitten (54) kleiner ist als die maximale Breite des Kupplungsabschnitts (20).

4. Das Gurtschloss nach Anspruch 1, **dadurch gekennzeichnet, dass**
ein Vorsprung (58) an dem Kupplungsabschnitt (20) des Ankerelements (16) oder dem inneren Umfang des unteren Endabschnitts des Stützelements (42) ausgebildet ist,
eine Ausnehmung (56, 57) an dem anderen Element angeordnet ist, wobei der Vorsprung (58) in die Ausnehmung (56, 57) eingepasst ist, wenn das Stützelement (42) sich in eine vorgegebene Position relativ zu dem Ankerelement (16) dreht, und
in dem Zustand, in dem der Vorsprung (58) in die Ausnehmung (56, 57) eingepasst ist, das Stützelement (42) provisorisch an der vorgegebenen Position rückgehalten wird.

5. Das Gurtschloss nach Anspruch 1, **dadurch gekennzeichnet, dass** das Kupplungselement einen Gurt (38), der die Form eines langen Streifens hat, aufweist,
eine Ausnehmung (24) in dem Kupplungsabschnitt (20) des Ankerelements (16) ausgebildet ist, wobei der Gurt durch die Ausnehmung (24) geführt ist, und
ein innerer Umfang der Ausnehmung (24) bogenförmig ausgebildet ist, konzentrisch mit dem bogenförmigen äußeren Umfang des Kupplungsabschnitts(20).

## Revendications

1. Dispositif formant attache comportant :
un élément d'ancrage (16) qui est fixé sur au moins un élément parmi une surface de plancher (64) d'un véhicule et un élément de structure d'un siège du véhicule, l'élément d'ancrage (16) comportant une partie de liaison (20), dont la périphérie extérieure d'une partie d'extrémité distale est formée selon une forme d'arc,
un corps principal d'attache (28) au niveau duquel une plaque formant languette est insérée, la plaque formant languette étant reliée à une sangle destinée à retenir un occupant du véhicule,
un élément de liaison (38) qui est souple, qui relie le corps principal d'attache (28) à la partie de liaison de l'élément d'ancrage (16), et
un élément de support (42) formé selon une forme tubulaire,
l'élément de support (42) recevant à l'intérieur l'élément de liaison (38),
l'élément de support (42) s'étendant entre le corps principal d'attache (28) et la partie de liaison (20) de l'élément d'ancrage (16),
**caractérisé en ce que**
une périphérie intérieure d'une partie d'extrémité inférieure de l'élément de support (42) est en prise avec la partie de liaison (20) de l'élément d'ancrage (16) à partir de la partie d'extrémité distale de celle-ci pour supporter le corps principal d'attache (28) dans un état autoportant, et
la périphérie intérieure de la partie d'extrémité inférieure de l'élément de support (42) est guidée au niveau de la périphérie extérieure en forme d'arc de la partie de liaison (20) de l'élément d'ancrage (16) de telle sorte que l'élément de support (42) est capable de tourner concentriquement à la périphérie extérieure en forme d'arc.

2. Dispositif formant attache selon la revendication 1, dans lequel l'élément de support (42) est formé d'un élément souple.

3. Dispositif formant attache selon la revendication 1, **caractérisé en ce qu'**une paire de parties de mise en butée (54) est formée au niveau de la périphérie intérieure de la partie d'extrémité inférieure de l'élément de support (42), les parties de mise en butée (54) venant en butée contre la périphérie extérieure en forme d'arc de la partie de liaison (20) de l'élément d'ancrage (16), et
la distance d'écartement d'une séparation en vis-à-vis des deux parties de mise en butée (54) est formée pour être plus petite qu'une dimension maximale dans la direction de la largeur de la partie de liaison (20).

4. Dispositif formant attache selon la revendication 1, **caractérisé en ce qu'**une partie en saillie (58) est formée au niveau d'une parmi la partie de liaison (20) de l'élément d'ancrage (16) et la périphérie intérieure de la partie d'extrémité inférieure de l'élément de support (42),
une partie évidée (56, 57) est formée au niveau de l'autre de celles-ci, la partie en saillie (58) s'agençant dans la partie évidée (56, 57) lorsque l'élément de support (42) tourne jusqu'à une position prédéterminée par rapport à l'élément d'ancrage (16), et
dans l'état dans lequel la partie en saillie (58) est agencée dans la partie évidée (56, 57), l'élément de support (42) est retenu de manière provisoire dans la position prédéterminée.

5. Dispositif formant attache selon la revendication 1, **caractérisé en ce que** l'élément de liaison est constitué d'une courroie (38) formée selon une forme de courroie longue,
un trou d'enroulement (24) est formé dans la partie de liaison (20) de l'élément d'ancrage (16), la courroie étant enroulée à travers le trou d'enroulement (24), et
une périphérie intérieure du trou d'enroulement (24) est formée selon une forme d'arc qui est concentrique à la périphérie extérieure en forme d'arc de la partie de liaison (20).
